# EUROPEAN PATENT APPLICATION

(11) **EP 0 793 032 A2**
(43) Date of publication of application: **03.09.1997**
(21) Application number: 97850022.1
(22) Date of filing: 12.02.1997
(51) Int. Cl.: F16D 25/12

(54) **Wear warning arrangement for a slave cylinder operated clutch**

(30) Priority: 16.02.1996 SE 9600565
(71) Applicant: SCANIA CV AKTIEBOLAG, S-151 87 Södertälje (SE)
(72) Inventor: Nilsson, Kennet, 151 32 Södertälje (SE); Nordkvist, Johan, 151 35 Södertälje (SE)
(74) Representative: Waldebäck, Hans Olov

(57) **Abstract**

A wear warning arrangement for a slave cylinder operated vehicle clutch includes a valve (4) which is mounted on the slave cylinder (5) and a sensor (10) which cooperates with the slave cylinder working piston (9), detects the degree of wear of the clutch linings and at a predetermined degree of wear switches the valve so that the driver receives a wear warning by experiencing increased resistance to clutch operation. The valve is provided with a valve seat (14) and a valve element (16) which cooperates with the latter and which, by means of a blocking body (18) connected to the sensor (10), can be caused to abut against or be at a distance from the valve seat in order to adjust the flow through the valve.

## Description

### Technical field

The present invention relates to a wear warning arrangement for a slave cylinder operated clutch, preferably forming part of a vehicle drive unit, according to the preamble to patent claim 1.

### State of the art

Disc clutches are subject to continuous wear and to make timely replacement of their discs possible it is desirable to be able to obtain an indication of their degree of wear without having to dismantle the clutch. Attempts have been made to solve this problem by means of various types of sensor. A method adopted in the case of slave cylinder operated clutches has been to arrange a sensor directly on the slave cylinder in order to detect the movement of the working piston. In this connection, experiments have been made with electrical indication, but the quality required for components involved in such solutions make the latter relatively expensive and there have also been problems with individual adaptation to different clutch discs.

Another type of solution adopted for slave cylinder operated clutches has been to make the clutch pedal become stiffer to operate when a certain degree of wear is reached. This is achieved by using the slave cylinder working piston to alter the position of a valve in the line which supplies hydraulic medium to the slave cylinder. The two Swedish patent applications 9304360-2 and 9304361-0 each refer to a solution of this type. In both cases a valve slide movable in parallel with the slave cylinder working piston is used to adjust the valve between an unconstricted and a constricted position. A disadvantage of this is that relatively great precision is required in valve slide and valve housing production, while at the same time there are exacting requirements for good sealing of the valve slide. Moreover, the sensor device travels within the valve slide, which may cause risk of unintentional movement of the valve slide.

### Object of the invention

The invention aims to improve an arrangement of the lastnamed type so that it will be simpler, less expensive and more reliable.

### Description of the invention

In accordance with the invention the object indicated is achieved by the arrangement being designed according to what is indicated in the characterising part of patent claim 1.

The fact that the valve incorporates a valve seat and a movable valve element which cooperates with the latter results in a safe and simple valve. Using also a blocking body, which is connected to the sensor, to control the movement of the valve element results in a distinct change of valve position and hence a distinct wear warning to the driver through the clutch suddenly becoming stiffer to operate, although remaining fully operable.

According to a first embodiment, the blocking body may be made movable in a direction substantially perpendicular to the direction of movement of the sensor. This makes it possible for the sensor to be totally unaffected by hydraulic medium. According to another embodiment, the blocking body may instead be movable in a direction parallel with the direction of movement of the sensor. This makes it possible to combine the sensor and the blocking body.

The dependent claims indicate further advantageous embodiments of the invention. Their advantages are described in more detail below.

### List of drawings

Fig. 1 shows a side view of an arrangement according to the invention, in which the clutch is in a disengaged position and the sensor is in a position for new linings,
Fig.2 shows on an enlarged scale a detail from Fig. 1,
Fig.3 corresponds to Fig. 1 but shows the clutch in an engaged position and the sensor in a position for worn linings,
Fig.4 shows a partial end view of the arrangement in Fig. 1,
Fig.5 shows a view from above of an alternative embodiment of the arrangement according to the invention, with the clutch in an engaged position and with the sensor in the course of changing to a position for worn linings, and
Fig.6 shows a section VI-VI in Fig.5.

### Description of preferred embodiments

The invention is described in the ensuing for use on a vehicle but may of course also be applied in other contexts.

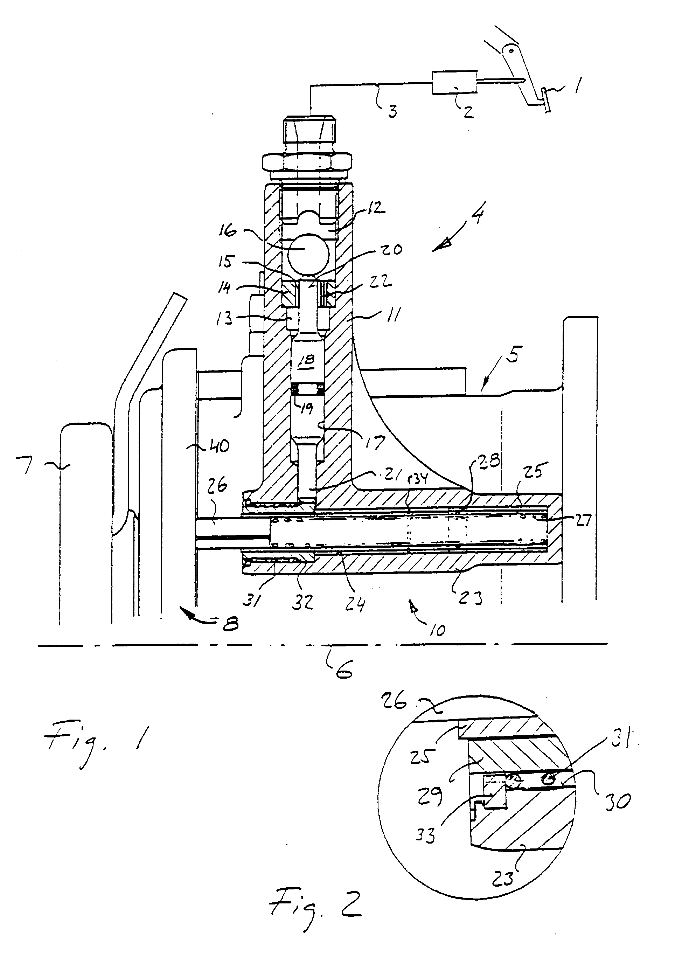

A clutch pedal I for operating a conventional clutch of disc type forming part of the vehicle transmission between the drive engine and the gearbox is arranged at the driver's position, as illustrated in Fig. 1. The clutch pedal 1 acts on a master cylinder 2 which, via a hydraulic line 3 and a valve 4, is connected to a slave cylinder 5, which is arranged concentrically about the centreline 6 of a clutch. This clutch, which is shown in no more detail here, is connected to the working piston 9 of the slave cylinder 5 via a connector 7 which is intended for connection to the clutch fan and via a bearing unit 8 which contains a disengagement bearing. In this case the clutch is of the pulling type, which means that for disengagement it is acted on by pulling force. When the pulling force ceases, spring force from the clutch fan brings about drive force transmission between the engine and the gearbox. The clutch may of course be instead of the pushing type, with consequent changes to the construction of the arrangement illustrated. Since both clutches and slave cylinders of various kinds are well known and do not form part of the real invention, no more detailed description of the clutch and the slave cylinder will be given in the ensuing. Swedish patent application 9304360-2 is referred to as an example of known technology in this respect.

An arrangement according to the invention for detecting and indicating to and warning the driver that clutch disc linings are worn and need replacing incorporates the aforesaid valve 4 and a sensor 10 which cooperates with the latter and with the working piston 9 of the slave cylinder 5. The valve 4 and the sensor 10 are shown here assembled to form a unit mounted on the slave cylinder 5, but they may also, for example, be wholly or partly integrated with the slave cylinder 5 or be mounted in some other suitable manner.

The valve 4 has a valve housing 11 in which there are an inlet port 12 connected to the hydraulic line 3 and an outlet port 13 connected to the slave cylinder 5. Between the inlet port 12 and the outlet port 13 there is a valve seat 14 which is fitted firmly into the valve housing 11 and has in a central portion a port 15 via which the inlet port 12 and the outlet port 13 are in mutual communication. The port 15 may be blocked by a valve element 16, here in the form of a ball and arranged for movement in the inlet port 12, being caused to abut against the valve seat 14. In the valve housing 11 there is also a control port 17 which is connected to the outlet port 13 and in which a longitudinal blocking body 18 is placed movably and seals with respect to the control port walls by means of a seal 19. The seal 19 prevents hydraulic medium leaking past the blocking body 18, while at the same time the blocking body 18 forms a piston which hydraulic medium pressure urges downwards, away from the valve seat 14, in a direction perpendicular to the centreline 6. An upper first contact end 20 on the blocking body 18 travels with much clearance through the port 15 in the valve seat 14 and can, in the position shown in Fig. 1, hold the valve element 16 at a certain distance from the valve seat 14. A lower second contact end 21 of the blocking body 18 is designed to cooperate with the sensor 10. In the valve seat 14 there is in addition to the port 15 a throttle port 22 which has a significantly smaller area than the annular zone created in the port 15 by the first contact end 20 of the blocking body 18. This means that when the port 15 is blocked by the valve element 16, flow to the outlet port 13 remains possible via the throttle port 22 but only to a significantly smaller extent. This constriction may also be achieved in a number of other ways, e.g. by making the port 15 irregular so that the valve element 16 cannot seal fully.

The sensor 10 is embodied as follows. In a sensor housing 23, which is advantageously integral with the valve housing 11, there is a sensor port 24 which extends at a right angle to the control port 17 and in which a sensor device 25 in the form of a tube is inserted with a certain clearance and is movable parallel with the centreline 6. In the opposite end of the sensor device 25 from the clutch there is a contact element 26 which is intended to have its free end in contact with a cover 40 firmly connected to the working piston 9. A coil spring 27 placed inside the sensor device 25 is used to urge the contact element 26 and hence also the sensor device 25 towards the cover 40, for the sake of contact between cover and the contact element. The sensor device 25 has a smaller diameter than the sensor port 24 and carries on its section situated on the right in the drawing a bushing 28 which provides guidance in the sensor port 24. The left section of the sensor device 25 is guided by and movable in a control body 29 which is arranged for movement in a broadened outer portion 30 of the sensor port 24. A coil spring 31 (see also Fig.2) which has one end pressing against a shoulder 32 to the right of the control body 29 and its other end pressing against a blocking ring 33 arranged in the sensor housing 33 urges the control body 29 to the right to an end position shown in Fig. 1. The sensor device 25 supports at a predetermined point on its outside a carrier device 34 which is intended to be able to be caused to abut against the control body 29 in order to move the latter to the left, i.e. towards the clutch, for wear indication.

When fitting the sensor 10 to the slave cylinder 5, the contact element 26, which is locked by friction in the sensor device 24, is placed outermost in the latter. Thereafter the slave cylinder is pressurised in order to retract the working piston 9, while the cover 40 via the contact element 26 forces the sensor device 25 to the right, to an end position shown in Fig. 1 whereby the contact element 26 is pushed into the sensor device 25 until the working piston end position is reached. The degree of protrusion of the contact element 26 relative to the sensor device 25 is thus adapted to the position of the cover 40 when the working piston 9 is retracted, and can thereafter be maintained unchanged.

The arrangement described in Figs.1-4 according to the invention functions as follows. In normal operation, with normally worn linings in the clutch, the sensor device 25 will be moved to and fro in the sensor housing 23 when the working piston 9 moves to and fro and the spring 29 presses the contact element 26 against the cover 40. At the same time there will always be a certain distance between the carrier device 34 and the control body 29. This means that the spring 31 keeps the control body 29 in its end position shown in Fig. 1 whereby the second contact end 21 of the blocking body 18 presses against the shoulder 32 of the control body 29 and hence holds the blocking body 18 in such a position as to prevent the valve element 16 from abutting against the valve seat 14. During clutch operation, hydraulic medium may thus flow without restriction into the outlet port 13 and therefrom to an inlet 35, shown in Fig.4, to the slave cylinder 5. In this case the driver experiences normal resistance from the clutch.

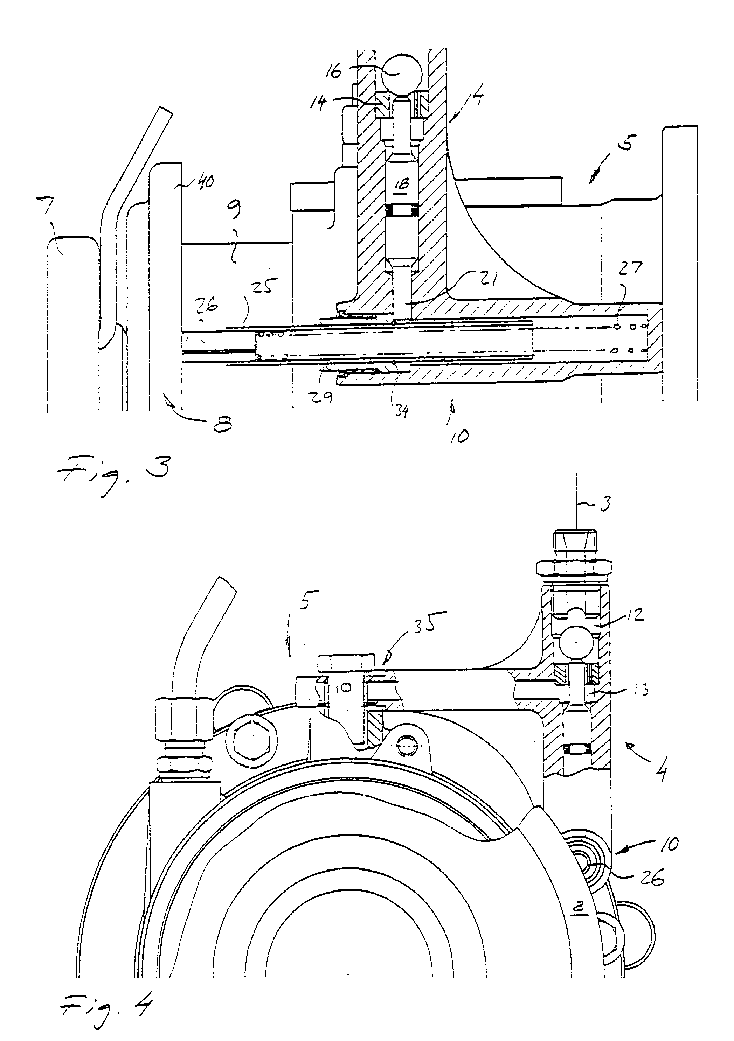

As the clutch linings become worn the working piston 9 will protrude ever further to the left from the slave cylinder 5 when the clutch is in its engaged position. At a predetermined degree of wear the carrier device 34 will have moved so far to the left that, as shown in Fig.3, the control body 29, against the force from the spring 31, has travelled so far out from the sensor housing 23 that the hydraulic pressure has pushed the blocking body 18 to a position where its second contact end 21 has slid away from the shoulder 32 so that the valve element can abut against its valve seat 14 and hence direct the flow through the valve 4 to the throttle port 22. This means that the driver can still operate the clutch but now finds it substantially stiffer than before. The driver thus receives a distinct indication that it is time to change the clutch linings.

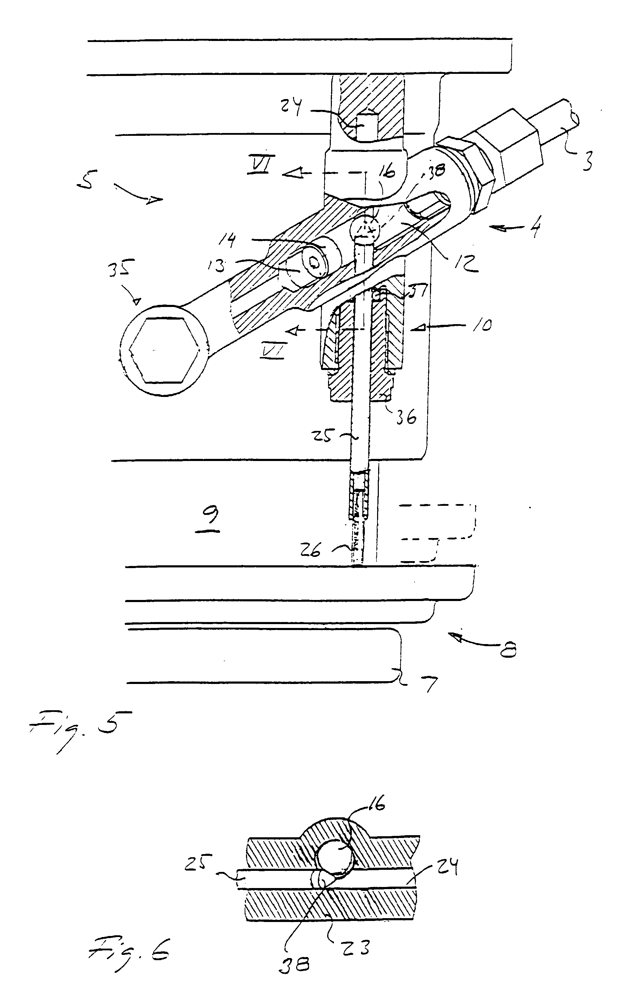

An alternative embodiment is shown in Figs. 5 and 6. The principle of construction of the valve 4 is the same as before but it is here placed differently relative to the slave cylinder 5 and the sensor 10 and it also has a differently embodied and positioned blocking body 18 for acting on the position of the valve element 16.

As before, the valve element 16 is movable in an inlet port 12 and can be prevented by means of a blocking body from abutting against the valve seat 14. The blocking body in this case, however, consists of the sensor device 25, which, as before, is placed in a sensor port 24 arranged in a sensor housing 23. This sensor port 24 crosses the inlet port 12 in such a way as to communicate with it at the intersection point. Since the portion of the sensor port 24 situated above the inlet port 12 has a larger diameter than the corresponding end portion of the sensor device 25, hydraulic medium pressure may be used to urge the sensor device 25 towards the clutch. At the same time, pressure medium leakage is prevented by a seal 37 arranged in the sensor housing 23 at the end of a plug 36. As may be seen particularly in Fig.6, the valve element 16 and the blocking body are movable in different planes, which means that they have directions of movement which intersect.

As in the embodiment according to Figs. 1-4, the sensor 10 is calibrated at the time of being fitted to the slave cylinder 5 by the working piston 9 being retracted and hence causing the sensor device 25 to "bottom" in the sensor port 24 so that the contact element 26 can be pressed as necessary into the sensor device 25.

The arrangement according to Figs. 5 and 6 functions as follows. During normal operation with normally worn linings in the clutch, the sensor device 25 is inserted so far into the sensor port 24 that its tip 38 is close to the bottom of the sensor port 24, i.e., above the inlet port 12 in Fig.5. In this situation the valve element 16 is to the right (in Fig.5) of the sensor device 25 and is prevented by the latter from coming into contact with the valve seat 14. The driver experiences normal resistance from the clutch.

As the wear of the linings increases, the sensor device 25 follows the working piston 9 ever further out when clutch operation commences. In the position shown in Fig.5, a predetermined degree of wear has been reached such that the sensor device 25, i.e. in this case the blocking body, is just on the point of letting the valve element 16 slip past to a position for abutment against the valve seat 14. After this change of position of the valve 4, the constriction effect in the valve 4 makes the driver experience a marked increase in the force required for clutch operation and hence receive a timely wear warning.

The blocking body intended to control the position of the valve element has been referred to above in a couple of different embodiments and locations, but a number of further variants is of course conceivable within the scope of the invention, and alternative variants of valve and sensor are also possible.

The selected valve embodiment makes simple and unhindered flow possible in the return direction, since it is then easy to make the valve element lift away from the valve seat.

## Claims

1. Wear warning device for a slave cylinder operated clutch incorporating a valve (4) which is arranged in the supply line to a slave cylinder (5) mounted concentrically with the clutch, and a sensor (10) which cooperates with the slave cylinder working piston (9), is for detecting the degree of wear of the clutch linings and is arranged so that when the clutch linings reach a predetermined degree of wear it shifts the valve (4) from an unconstricted to a constricted position whereby the clutch operator receives a wear warning from increased resistance to the operation of the clutch, **characterised** in that the valve (4) includes a valve seat (14) and a movable valve element (16) which cooperates with the latter, that a blocking body (18,25) is arranged so that when the valve switches from the unconstricted to the constricted position the blocking body (18,25) moves from a position where it prevents the valve element (16) from abutting against the valve seat (14) to a position where the valve element abuts against the valve seat and reduces the pressure medium flow through the valve in order to increase the clutch operating resistance, and that the blocking body (18,25) is connected to the sensor (10).

2. Arrangement according to claim 1, **characterised** in that the blocking body (18) is movable in a direction substantially perpendicular to the direction of movement of the sensor.

3. Arrangement according to claim 1, **characterised** in that the blocking body (25) is movable in a direction parallel with the direction of movement of the sensor.

4. Arrangement according to claim 2, **characterised** in that the sensor (10) includes first (25) and second (29) bodies whereby the first body (25) is elongated and is axially movable as a function of clutch lining wear, and whereby the second body (29) cooperates with the blocking body (18) and is movable, by means of the first body (25), from a blocking position where it together with the blocking body prevents the valve element (16) from abutting against the valve seat (14) to a position where the valve element abuts against the valve seat.

5. Arrangement according to claim 4, **characterised** in that the second body (29) is spring-loaded towards its blocking position and that the first body (25) is spring-loaded in a direction whereby it endeavours to move the second body.

6. Arrangement according to claim 4 or 5, **characterised** in that the blocking body (18) has a section (20) which travels through a central portion (15) of the valve seat (14) and that the blocking body (18) travels sealingly in a port (18) whose section facing the valve seat is situated in the slave cylinder inlet line (13).

7. Arrangement according to any one of claims 4-6, **characterised** in that the first body (25) is concentric with and travels through the second body (29).

8. Arrangement according to claim 3, **characterised** in that the sensor device (25) also constitutes the blocking body and has its direction of movement crossing the direction of movement of the valve element (16) and that the sensor device (25) is arranged so that in a blocking position it is between the valve seat (14) and the valve element (16).

9. Arrangement according to claim 8, **characterised** in that the sensor device (25) is elongated and is axially movable to a non-blocking position whereby the valve element (16) can move past the blocking element to the valve seat (14).

10. Arrangement according to claim 9, **characterised** in that the sensor device (25) travels sealingly in a port (24) which communicates with the space (12) in which the valve element (16) is situated and that the sensor device (25) is arranged to be subjected by hydraulic medium in the aforesaid space to a force urging it towards a non-blocking position.
